# EUROPEAN PATENT SPECIFICATION

(11) **EP 1 150 264 B1**
(45) Date of publication and mention of the grant of the patent: **15.09.2004**
(21) Application number: 00201457.9
(22) Date of filing: 25.04.2000
(51) Int. Cl.: G08G 1/09, G08B 5/22

(54) **Method for scrolling through listed traffic data**
Verfahren zur Auswahl aus einer Liste mit Verkehrsinformationen
Méthode de défilement pour une liste de données de trafic

(43) Date of publication of application: 31.10.2001
(73) Proprietor: Siemens Aktiengesellschaft, 80333 München (DE)
(72) Inventor: Völkel, Andreas, 35576 Braunfels (DE)

(56) References cited:
- EP-A- 0 725 504
- EP-A- 0 836 292
- DE-A- 19 629 233
- US-A- 5 590 256
- RUDNICKY A I ET AL: "SURVEY OF CURRENT SPEECH TECHNOLOGY" COMMUNICATIONS OF THE ASSOCIATION FOR COMPUTING MACHINERY,US,ASSOCIATION FOR COMPUTING MACHINERY. NEW YORK, vol. 37, no. 3, 1 March 1994 (1994-03-01), pages 52-57, XP000449094 ISSN: 0001-0782

## Description

The invention relates to a method for scrolling listed displayed data with regard to a cursor position, said displayed data comprising traffic messages pertaining to various locations identified with location identifiers and grouped in accordance with said location identifiers. Such a method is known, e. g. from the Carin Navigation system and provides the user with lists of traffic messages grouped in accordance with the relevant locations. The user, who wants to know which events he may expect when following a planned route, is to browse through the lists to arrive at the traffic message(s) of interest to him. The know method doesn't require the user to input the name of the location, and can consequently dispense with alphanumeric user I/O facilities needed therefore.

However, along with the traffic density the number of traffic messages made available and being broadcasted is increasingly growing and therewith also the time needed for the user to scroll through the lists in search of the relevant messages.

From EP-A-0 836 292 a method is known for scrolling listed display data which are location data. A user can scroll the list rapidly by a jump to a next location which is the first location in alphabetical order deviating in the first letter from the presently selected location.

In consequence, amongst other things, it is an object of the present invention to provide a method for scrolling through a list of traffic messages pertaining to various locations that allows to substantially reduce the search time for the user, without requiring the user to input the exact name of the wanted item. It is another object of the invention to allow the user to view all traffic messages received while scrolling.

Now therefore, according to one of its aspects the invention is characterised by an automatic jump of the cursor position from a first to a second traffic message on the basis of a predetermined data related selection key identifying traffic messages having a location identifier deviation at a predetermined character position of from the location identifier of the first traffic message.

By applying said measure, the scrolling is speeded up by skipping predetermined traffic messages identified by the selection key. The selection key introduces a degree of freedom in focussing on traffic messages of interest without the need for an alphanumeric input thereof.

said selection key identifies traffic messages having a location identifier deviation from the location identifier of the first traffic message. By storing the location identifier of the traffic message lastly appointed by the cursor, all traffic messages pertaining to the same location can easily be identified and skipped.

Preferably, the second traffic message pertains to a location identifier following up in alphabetic order on the location of the first traffic message. This allows to quickly recognise and skip all traffic messages relating to locations, in which the user is not interested.

Another preferred method according to the invention allowing new traffic messages to be presented to the user, also when pertaining to locations, which have been presented before, is characterised in that the key is being reset at default content at the reception of a traffic message.

Alternatively, the jump width can be defined relative to the size of the data base, or the length of the list to be scrolled. Such a method according to the invention is characterised by said key comprising a predetermined number defining a jump width in percentage of the total number of traffic messages in the list to be scrolled between the first and the second traffic message, said jump width being rounded off into an integer number of traffic messages.

The invention also relates to a receiver system comprising a display facility for imaging lists of traffic messages pertaining to various locations identified with location identifiers included in said traffic messages, displayed on a screen and grouped in accordance with said location identifiers, characterised by a user interface facility comprising user input means for selecting between first, second and third scrolling speed up modes based on skipping traffic messages in alphabetic order of location identifiers, in absolute numbers and in a percentage of the total traffic message data base or list, respectively. This enables the user to trade-off scrolling speed against search accuracy. Further advantageous aspects of the invention are recited in dependent Claims.

These and further aspects and advantages of the invention will be discussed more in detail hereinafter with reference to the disclosure of preferred embodiments, and in particular with reference to the appended drawings that show in:
Figure 1, a receiver system according to the invention being provided with means receiving traffic messages and for visual and/or audible representation thereof;
Figure 2, a skipping procedure followed in a first method according to the invention, applied to a list of traffic messages;
Figure 3, an applicable flow chart pertaining to said first scrolling method according to the invention;
Figure 4, an applicable flow chart illustrating a method for selecting one out of several scrolling methods;
Figure 5, an applicable flow chart pertaining to second and third scrolling methods according to the invention;
Figure 6, a user I/O facility for scrolling method selection;
Figure 7, listings illustrating principles of several scrolling methods applied to a relatively small database;
Figure 8, listings illustrating principles of several scrolling methods applied to a relatively large database.

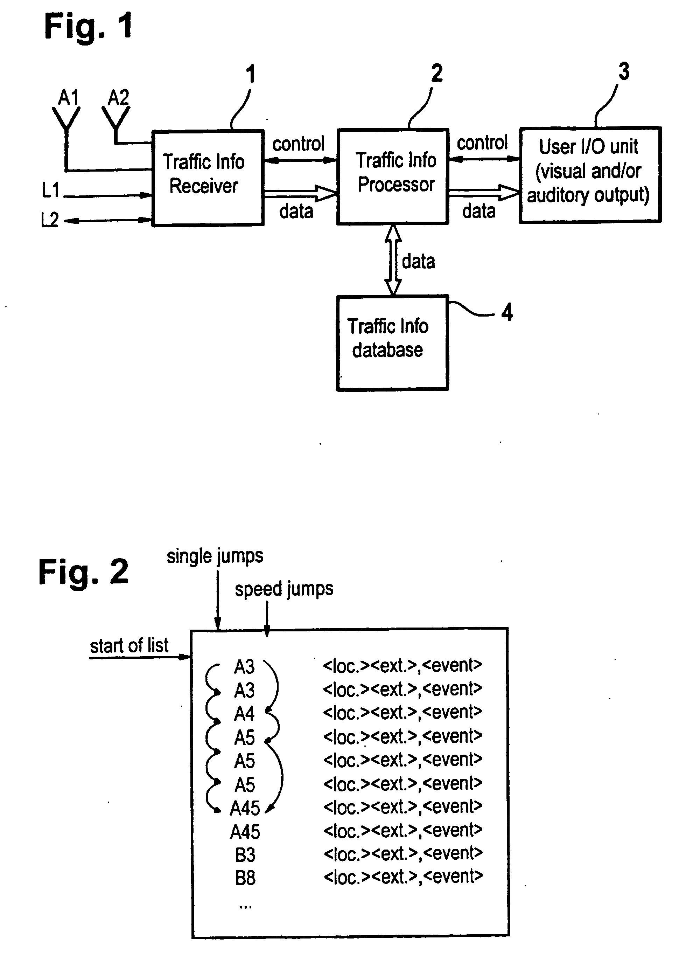

Figure 1 shows a receiver system according to the invention comprising a receiver unit 1 being provided with antenna means A1, A2 comprising a bi-directional antenna A1 and a uni-directional antenna A2 for receiving RF radio signals carrying traffic data. These traffic data include traffic messages. Traffic data may also be supplied to the receiver unit 1 via a uni-directional link L1 or a bi-directional link L2. These links may be line- or radio- links. The received traffic messages are processed in a traffic info processor 2, which also controls the up- and downloading of traffic data in a traffic info data base 4 and the visual and/or audible representation of traffic messages in the user I/O unit 3. The receiver system described sofar corresponds to the one used in the above Carin navigation system and no further knowledge is necessary to understand the invention.

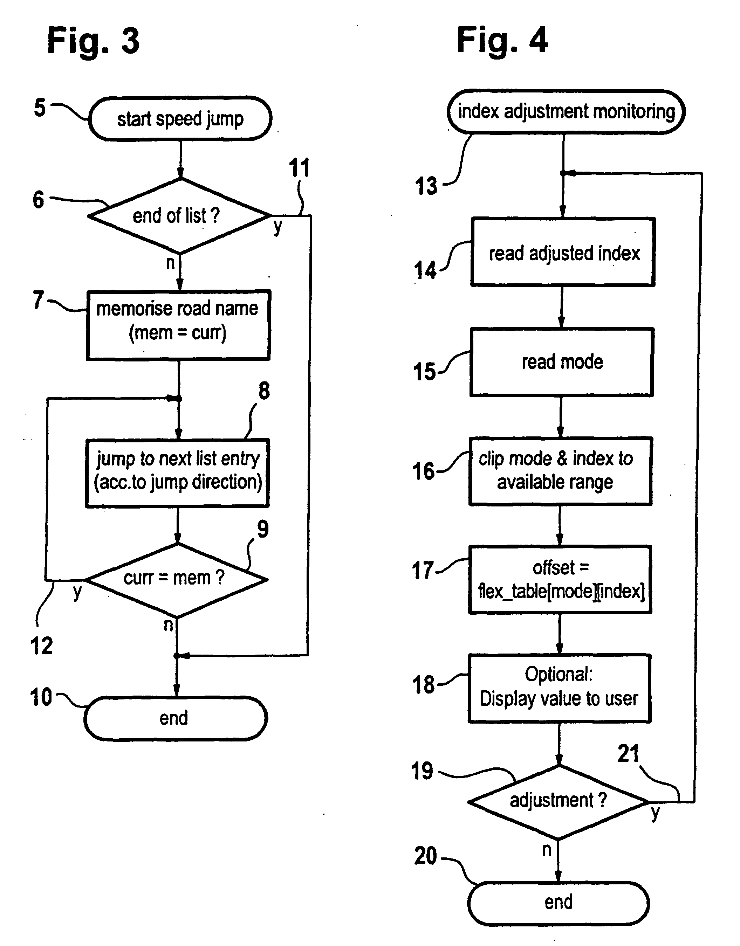

Unlike the above conventional Carin navigation system, the traffic info processor 2 of the receiver of Figure 1 provides a method according to the invention to speed up scrolling lists of traffic messages as will be explained in more detail with reference to the flowcharts of Figures 3 to 5.

Figure 2 shows a database list of traffic messages comprising per each display line, a traffic message comprising the name of the location <loc.> the traffic message is pertaining to, which location is coded with a location identifier (A3, A4, ...., B3, B8, etc.), an extension <ext.> to more accurately define the place within said location of interest (e.g. place X, direction Y) and an event indication <event> referring to the specific event (e.g. fog, traffic jam, slowly driving traffic, etc.) occurring at the location of interest. The traffic messages are listed in alphabetical/alphanumerical order of their location identifier. Where the above conventional method only allows the user to scroll the lists of traffic messages line wise, the invention now provides the option for an automatic jump of the cursor position from a first to a second traffic message on the basis of a predetermined data related selection key. The selection key in the Figure 2 database list of traffic messages is identifying traffic messages having a location identifier deviating from the location identifier of the first traffic message. This means, that in the given example, the traffic messages on the second, fifth and sixth, and eighth lines of the list counted from the upper start line as the first line are being skipped. This allows to substantially reduce the search time for the user, without requiring the user to input the exact name of the wanted item. Furthermore, the user is able to view all traffic messages received while scrolling.
Preferably, the second traffic message, i.e. the one at which scrolling presumes after a jump of the cursor position, pertains to a location identifier following up in alphabetic and/or in alphanumerical order on the location of the first traffic message. This allows for a quick and efficient scanning of the list and focussing on the traffic message(s) of interest.
To avoid new traffic messages pertaining to a location identifier identical to the one of the first traffic message from being skipped the key is being reset at default content at the reception of any new traffic message having a location identifier corresponding to said first traffic message. The location identifier of the new traffic message therewith deviate from the default key content causing the scrolling to resume at this new traffic message.

Figure 3 shows an applicable flow chart pertaining to the scrolling method according to the invention as described with regard to Figure 2, also being referred to as first scrolling method. In block 5, the method is started, and the necessary hardware and software facilities within the traffic info processor 2, the user I/O unit 3 and the traffic info database 4 are assigned. In block 6, the method provides a check on the cursor position system with regard to the end of the list. If yes, then via link 11 the method is stopped in block 10 leaving the cursor positioned at the last display line. If no, then in block 7 the location identifier (e.g. the road name) at the actual cursor position (e.g. the first or upper list display line) is being uploaded or stored in a memory of the traffic info database 4. Block 7 is followed by block 8, in which the cursor position is shifted by one display line and in which the location identifier of the traffic message at the new cursor position is read. In block 9 the location identifier of the traffic message at the new cursor position is being compared with the stored location identifier and if coinciding, the method returns via return link 12 to block 8 again, whereafter the loop through block 8 and return link 12 will be repeated (this repetition hereinafter being referred to as looping), until the traffic message at the new cursor position pertains to a location identified by a location identifier deviating from the stored location identifier. The looping effectuates a jump in the cursor position, which is ended in block 10 and whereafter the scrolling procedure is resumed.

In the above method the location identifier as a whole is used to define which traffic messages are to be skipped. However, in a preferred embodiment of the method according to the invention, the predetermined data related selection key contains a location identifier deviating at a predetermined character position of from the location identifier of the first traffic message. This method, hereinafter being referred to as Alpha mode, or second scrolling method according to the invention, allows for a more flexible and accurate skipping of non-relevant traffic messages then the first scrolling method, because here the resumption in scrolling can be set on the basis of a change in character at a specific place in the location identifier.

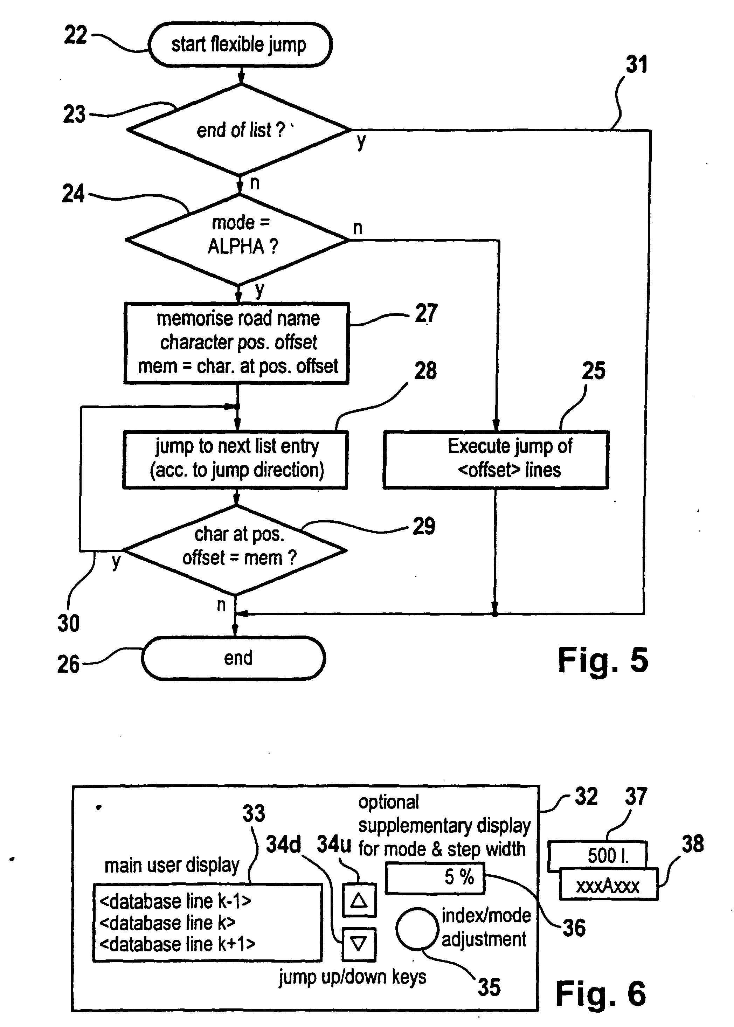

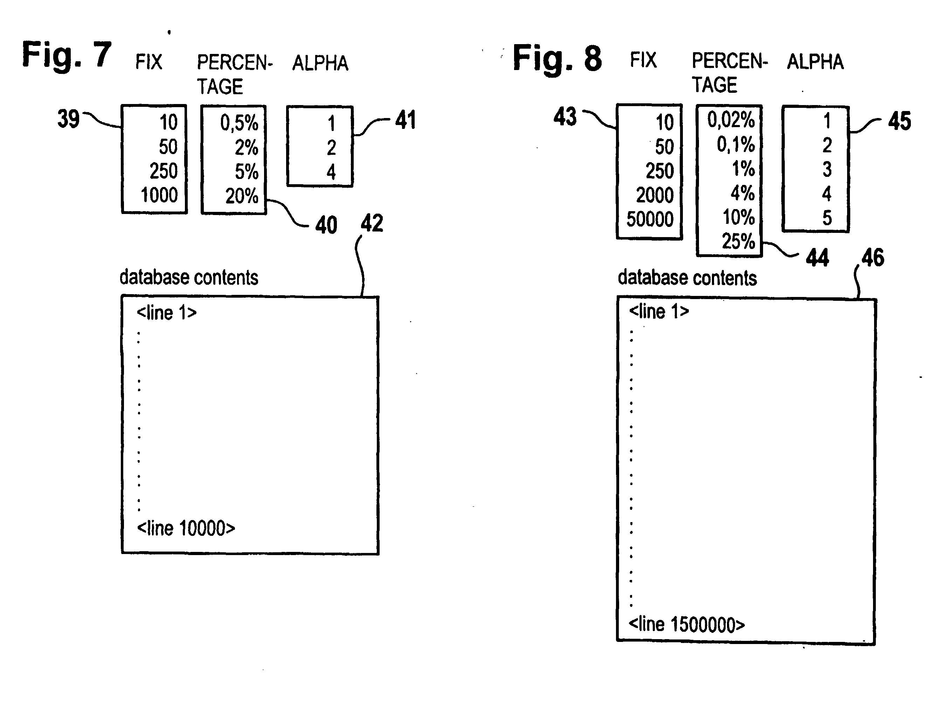

It is alternatively possible to define the jumpwidth by a predetermined integer number referring to the number of traffic messages to be skipped, i.e. the number of traffic messages between the first and the second traffic message. This scrolling method is hereinafter referred to as third scrolling method and is explained with reference to the flowchart of Figure 5 and the listings of Figures 7 and 8.

It is alternatively possible to define a jump width in a percentage of the total number of traffic messages in the list to be scrolled between the first and the second traffic message, said jump width being rounded off into an integer number of traffic messages. This scrolling method is hereinafter referred to as fourth scrolling method and is also explained with reference to the flowchart of Figure 5 and the listings of Figures 7 and 8.

A user controlled selection of one out of said fourth scrolling methods can be inputted by the user via a user I/O facility as shown in Figure 6. The user I/O facility comprises manually operable input means 34u, 34d and an index/mode adjustment selector 35. By an operation of the index/mode adjustment selector 35, the user may select between a class of alphabetic/alphanumerical scrolling methods (i.e. the above first and second scrolling method on the one hand) and a class of line number defined scrolling methods (i.e. the above third and fourth scrolling method on the other hand). Within these mode classes the user may select between the first and second scrolling method and/or between the third and fourth scrolling method. The specific scrolling method wanted is selected by the index/mode adjustment button 35, whereas the exact character position of the location identifier for the second scrolling method, the number of lines in absolute integers for the third scrolling method, and the percentage of the complete database for the fourth scrolling method is adjusted by up/down buttons 34u and 34d, respectively and visually presented by first display means 36. Furthermore the user I/O facility shown is provided with second display means 33 for visually presenting the traffic message at the database line appointed by the cursor as those at the preceding and following lines. An adjustment to the third scrolling method with a jump width of 500 lines may be presented as shown in block 37, an adjustment to the second scrolling method with a character position of the location identifier at the fourth place may be presented by the first display means as shown in block 38.

Figure 4 shows an applicable flow chart illustrating a method for selecting one out of several scrolling methods, e.g. those described with reference to Figure 5 hereinafter, using the user I/O facility of Figure 6. The method starts in block 13 with index adjustment monitoring, and reads in block 14 the skipping index and in block 15 the skipping mode adjustment as inputted by the user by means of buttons 35, 34u and 34d. In block 16 this index, respectively mode, is clipped to and/or combined with the available range and an offset or jumpwidth definition is derived therefrom in block 17. In optional block 18 the offset value can be displayed to the user, upon which in block 19 the occurrence of an adjustment is detected. In the absence of such adjustment the method stops in block 20, whereas at the detection of an adjustment the method returns via link 21 to block 14 to repeating its course through the flowchart.

Figure 5 shows an applicable flow chart pertaining to an automatic flexible mode setting between the above mode classes of alphabetic/alphanumerical scrolling methods (i.e. the above first and second scrolling method on the one hand) and of line number defined scrolling methods (i.e. the above third and fourth scrolling method on the other hand). The operation of this automatic flexible mode setting is started in block 22 followed by a check on the cursor position in block 23. If the cursor is positioned at the end of the list of traffic messages to be scrolled, then the operation is ended via link 31 in block 26. If the cursor is not positioned at the end of the list of traffic messages to be scrolled, then in block 24 the skipping mode as inputted by the user via the button 35 of the user I/O facility of Figure 6 is checked. If the class mode chosen is alphabetic/alphanumerical, then in block 27 either the location identifier, e.g. the road name, is being stored in a memory, allowing for the execution of the above first scrolling method. Or, the nth character of this location identifier or road name, n being inputted by the user, is being stored in a memory, allowing for the execution of the above second scrolling method. In either of both first and second methods, block 27 is followed in block 28 by a shift of the cursor position by one display line to the next traffic message in the scrolling direction. In the above first scrolling method, in block 29 the location identifier of said next traffic message as a whole is being compared with the stored location identifier. In the above second scrolling method, block 29 represents the comparison between the nth character of the location identifier of said next traffic message with the stored one. If these two characters coincide, then the operation returns through link 30 to block 28 forming a loop, which is left through the block 29 at a deviation between said two characters to stop the operation in block 26. Therewith all traffic messages having a location identifier being identical in the nth character thereof are being skipped except the one first appointed by the cursor in the scrolling procedure.

If the class mode chosen by the user is not alphabetic/alphanumerical, but line number defined, then a jump in the cursor position with a line defined jumpwidth is executed in block 25. The above third scrolling method is executed when the skipping mode is defined by a fixed integer number inputted by the user and indicating the number of lines to be skipped in the scrolling procedure. The above fourth scrolling method is executed when the skipping mode is defined by a percentage of the total number of traffic messages in the database inputted by the user. The percentage can be inputted by the user or be made to depend to the length of the list to be scrolled. In converting the chosen percentage into the corresponding number of lines to be skipped, the result is rounded off into an integer number of lines.

Figure 7 shows the scrolling or skipping options provided to the user when applying the invention to a relatively small traffic info data base such as data base 42. The data base 42 includes traffic messages 1 to 10.000 to be represented in a line structured list on a display. The user may chose between various scrolling methods by an operation of button 35 of the I/O facility of Figure 6. The above second scrolling method is chosen when the user selects from an ALPHA list out of a predetermined set of integer values, a number indicating which character (1^{st}; 2^{nd} or 4^{th}) in the location identifier is to define the jump or skipping width. The above third scrolling method is chosen when the user selects from a FIX list one value out of a predetermined set of integer values (10; 50; 250; 1000), indicating how many lines are to be jumped over per each skipping operation of the cursor. The above third scrolling method is chosen when the user selects from a PERCENTAGE list one value out of a predetermined set of percentages (0.5%; 2%; 5%; 20%), indicating how many lines in a percentage of the total database are to be jumped over per each skipping operation of the cursor.

Figure 8 shows shows the scrolling or skipping options provided to the user when applying the invention to a relatively large traffic info data base such as data base 46. The data base 46 includes traffic messages 1 to 1.500.000 to be represented in a line structured list on a display. The user may chose between various scrolling methods by an operation of button 35 of the I/O facility of Figure 6. The above second scrolling method is chosen when the user selects from an ALPHA list out of a predetermined set of integer values, a number indicating which character (1^{st}; 2^{nd}; 3^{rd}; 4^{th} or 5^{th}) in the location identifier is to define the jump or skipping width. The above third scrolling method is chosen when the user selects from a FIX list one value out of a predetermined set of integer values (10; 50; 250; 2000; 50.000), indicating how many lines are to be jumped over per each skipping operation of the cursor. The above third scrolling method is chosen when the user selects from a PERCENTAGE list one value out of a predetermined set of percentages (0.02%; 0.1%; 1%; 4%; 10%; 25%), indicating how many lines in a percentage of the total database are to be jumped over per each skipping operation of the cursor.

It will be clear that the user input of mode and index preferences may well be speech controlled instead of manually controlled.

The person skilled in the art of route planning will recognize further policies to be followed within the ambit of the present invention, the scope of which has justfully been determined by the appended Claims hereinafter.

## Claims

1. Method for scrolling listed displayed data with regard to a cursor position, said displayed data comprising traffic messages pertaining to various locations identified with location identifiers and grouped in accordance with said location identifiers, **characterized by** an automatic jump of the cursor position from a first to a second traffic message on the basis of a predetermined data related selection key identifying traffic messages having a location identifier which deviates from the location identifier of the first traffic message at a predetermined position.

2. Method according to claim 1, **characterized by** the second traffic message pertaining to a location identifier following up in alphabetic order on the location of the first traffic message.

3. Method according to one of claims 1 or 2, **characterized in that** the key is being reset at default content at the reception of a traffic message having a location identifier corresponding to the first traffic message.

4. Method for scrolling listed displayed data with regard to a cursor position, said displayed data comprising traffic messages pertaining to various locations identified with location identifiers and grouped in accordance with said location identifiers, **characterized by** an automatic jump of the cursor position from a first to a second traffic message on the basis of a predetermined data related selection key comprising a predetermined number defining a jump width in percentage of the total number of traffic messages in the list to be scrolled between the first and the second traffic message, said jump width being rounded off into an integer number of traffic messages.

5. Method according to one of claims 1 to 4, **characterized by** a traffic message being displayed per each display line.

6. Method according to one of claims 1 to 5, **characterized by** said scrolling being controlled by speech.

7. Receiver system comprising a display facility for imaging lists of traffic messages pertaining to various locations identified with location identifiers included in said traffic messages, displayed on a screen and grouped in accordance with said location identifiers **characterized by** a user interface facility comprising user input means for selecting between first, second and third scrolling speed up modes based on skipping traffic messages in alphabetic order of location identifiers, in absolute numbers and in a percentage of the total traffic message data base or list, respectively.

8. Navigation system according to claim 7, **characterized by** said user input means being controlled by speech.

## Patentansprüche

1. Verfahren zum Ablaufenlassen von aufgelisteten angezeigten Daten in Bezug auf eine Cursor-Position, wobei die angezeigten Daten Verkehrsnachrichten bezüglich verschiedener, mit Ortskennungen identifizierter und entsprechend den Ortskennungen gruppierter Orte umfassen, **gekennzeichnet durch** einen automatischen Sprung der Cursor-Position von einer ersten zu einer zweiten Verkehrsnachricht auf Grundlage einer vorbestimmten datenbezogenen Auswahltaste, die Verkehrsnachrichten mit einer Ortskennung identifiziert, die von der Ortskennung der ersten Verkehrsnachricht an einer vorbestimmten Position abweicht.

2. Verfahren nach Anspruch 1, **dadurch gekennzeichnet, daß** die zweite Verkehrsnachricht bezüglich einer Ortskennung in alphabetischer Reihenfolge dem Ort der ersten Verkehrsnachricht folgt.

3. Verfahren nach einem der Ansprüche 1 oder 2, **dadurch gekennzeichnet, daß** die Taste bei Empfang einer Verkehrsnachricht mit einer der ersten Verkehrsnachricht entsprechenden Ortskennung auf Vorgabeinhalt rückgesetzt wird.

4. Verfahren zum Durchsuchen von aufgelisteten angezeigten Daten bezüglich einer Cursor-Position, wobei die angezeigten Daten Verkehrsnachrichten bezüglich verschiedener Orte umfaßt, die mit Ortskennungen identifiziert und entsprechend diesen Ortskennungen gruppiert sind, **gekennzeichnet durch** einen automatischen Sprung der Cursor-Position von einer ersten zu einer zweiten Verkehrsnachricht auf Grundlage einer vorbestimmten datenbezogenen Auswahltaste mit einer vorbestimmten Nummer, die eine Sprungweite als Prozentsatz der Gesamtzahl von zwischen der ersten und der zweiten Verkehrsnachricht zu durchsuchenden Verkehrsnachrichten in der Liste definiert, wobei diese Sprungweite in eine Ganzzahl von Verkehrsnachrichten abgerundet wird.

5. Verfahren nach einem der Ansprüche 1 bis 4, **dadurch gekennzeichnet, daß** je Anzeigezeile eine Verkehrsnachricht eingezeigt wird.

6. Verfahren nach einem der Ansprüche 1 bis 5, **dadurch gekennzeichnet, daß** die Durchsuchung durch Sprache gesteuert wird.

7. Empfängersystem mit einer Anzeigeeinrichtung zur Abbildung von Listen von Verkehrsnachrichten bezüglich verschiedener. Orte, die mit in den Verkehrsnachrichten enthaltenen Ortskennungen identifiziert werden, angezeigt auf einem Bildschirm und gruppiert entsprechend den Ortskennungen, **gekennzeichnet durch** eine Benutzerschnittstelleneinrichtung mit Benutzereingabemitteln zum Auswählen unter ersten, zweiten und dritten Durchsuchungsbeschleunigungsmodi auf Grundlage des Überspringens von Verkehrsnachrichten in alphabetischer Reihenfolge von Ortskennungen, in absoluten Zahlen bzw. als Prozentsatz der Gesamt-Verkehrsnachrichtendatenbank oder -liste.

8. Navigationssystem nach Anspruch 7, **dadurch gekennzeichnet, daß** das Benutzereingabemittel durch Sprache gesteuert wird.

## Revendications

1. Procédé de défilement de données affichées listées par rapport à une position du curseur, lesdites données affichées comprenant des messages de trafic se rapportant à divers emplacements identifiés à l'aide d'identificateurs d'emplacement et groupés conformément auxdits identificateurs d'emplacement, **caractérisé par** un saut automatique de la position du curseur d'un premier message de trafic à un deuxième message de trafic sur la base d'une clé de sélection prédéterminée associée aux données identifiant les messages de trafic possédant un identificateur d'emplacement qui est décalé de l'identificateur d'emplacement du premier message de trafic à une position prédéterminée.

2. Procédé selon la revendication 1, **caractérisé en ce que** le deuxième message de trafic se rapporte à un identificateur d'emplacement suivant, dans l'ordre alphabétique, l'emplacement du premier message de trafic.

3. Procédé selon l'une des revendications 1 ou 2, **caractérisé en ce que** la clé est réinitialisée à une valeur par défaut à la réception d'un message de trafic possédant un identificateur d'emplacement correspondant au premier message de trafic.

4. Procédé de défilement de données affichées listées par rapport à une position du curseur, lesdites données affichées comprenant des messages de trafic se rapportant à divers emplacements identifiés à l'aide d'identificateurs d'emplacement et groupés conformément auxdits identificateurs d'emplacement, **caractérisé par** un saut automatique de la position du curseur d'un premier message de trafic à un deuxième message de trafic sur la base d'une clé de sélection prédéterminée associée aux données comprenant un nombre prédéterminé définissant une largeur de saut en pourcentage du nombre total de messages de trafic dans la liste à faire défiler entre les premier et deuxième messages de trafic, ladite largeur de saut étant arrondie à un nombre entier de messages de trafic.

5. Procédé selon l'une des revendications 1 à 4, **caractérisé par** un message de trafic affiché pour chaque ligne d'affichage.

6. Procédé selon l'une des revendications 1 à 5, **caractérisé en ce que** ledit défilement est commandé par la voix.

7. Système de réception comprenant une installation d'affichage pour mettre en image des listes de messages de trafic se rapportant à divers emplacements identifiés à l'aide d'identificateurs d'emplacement inclus dans lesdits messages de trafic, affichés sur un écran et groupés conformément auxdits identificateurs d'emplacement, **caractérisé par** une installation d'interface utilisateur comprenant des moyens d'entrée d'utilisateur pour faire une sélection entre des premier, deuxième et troisième modes d'accélération de défilement basés respectivement sur le saut des messages de trafic dans l'ordre alphabétique des identificateurs d'emplacement, en nombres absolus et en pourcentage de la base de données ou de la liste totale des messages de trafic.

8. Système de navigation selon la revendication 7, **caractérisé en ce que** lesdits moyens d'entrée d'utilisateur sont commandés par la voix.
